# EUROPEAN PATENT SPECIFICATION

(11) **EP 2 325 713 B1**
(45) Date of publication and mention of the grant of the patent: **05.06.2013**
(21) Application number: 10190545.3
(22) Date of filing: 09.11.2010
(51) Int. Cl.: G05D 1/02

(54) **Methods and systems for movement of robotic device using video signal**
Verfahren und Systeme für die Bewegung von Robotervorrichtungen mit Videosignalen
Procédés et systèmes pour le mouvement d'un dispositif robotique à l'aide d'un signal vidéo

(30) Priority: 11.11.2009 US 616452; 11.11.2009 US 616577
(43) Date of publication of application: 25.05.2011
(73) Proprietor: Intellibot Robotics Llc, Richmond, Virginia 23238 (US)
(72) Inventor: Hillman, Henry L., Jr., Vancouver, WA 98683 (US); Knuth, David M., Jr., East Dubuque, IL 61025 (US); Daly, Daniel M., Brownsburg, IN 46112 (US); Coffman, Vinton, Pittsburgh, PA 15237 (US); McCann, Ralph, Richmond, VA 23226 (US); Herr, Stephen D., Richmond, VA 23236 (US); Thomas, Kevin L., Richmond, VA 23238 (US)
(74) Representative: Cooper, John

(56) References cited:
- WO-A1-94/22094
- US-A1- 2002 153 184
- US-A1- 2002 156 556
- US-A1- 2008 027 591
- US-A1- 2009 024 251
- US-A1- 2009 055 020

## Description

### BACKGROUND

Mobile robotic devices have minimized the human effort involved in performing everyday tasks. For example, automatic cleaning devices help maintaining and cleaning surfaces, such as hardwood floors, carpet and the like. Mobile robotic devices are useful, but location detection can be a challenge for the operation of such devices.

D1 (US2009/024251) relates to a method of estimating the pose of a mobile robot using a particle filter. The mobile robot of D1 has a video camera that is used to capture images as the mobile robot passes around an area. The images are extracted to build a map of the area. The map in D1 is continually updated by new features being captured by the video camera as the robot travels from one location to the next.

D2 (US2002/153184) relates to a robotic cleaner that navigates an area according to a predetermined pattern. The cleaner adapts the driving path by analyzing images photographed by a camera on the cleaner. The images are taken from an upper level camera and may be augmented by a second camera giving rise to three dimensional imaging.

D3 (US2009/055020) relates to a mobile robot that performs a cleaning process and creates a map. The map is created by capturing ceiling images as the robot navigates an area. The robot can determine a path that includes information about obstacles and the information from the map is used to navigate around the obstacles in the area if necessary.

### SUMMARY

Before the present methods are described, it is to be understood that this invention is not limited to the particular systems, methodologies or protocols described, as these may vary. It is also to be understood that the terminology used herein is for the purpose of describing particular embodiments only, and is not intended to limit the scope of the present disclosure which will be limited only by the appended claims.

It must be noted that as used herein and in the appended claims, the singular forms "a," "an," and "the" include plural reference unless the context clearly dictates otherwise. Unless defined otherwise, all technical and scientific terms used herein have the same meanings as commonly understood by one of ordinary skill in the art. As used herein, the term "comprising" means "including, but not limited to."

In an embodiment, a method of navigating an area using a mobile robotic device may include receiving, from a video camera, information associated with an edge located on a surface, determining, by a mobile robotic device, a position of the mobile robotic device on the surface relative to the edge and adjusting the position of the mobile robotic device based on a proximity of the mobile robotic device to the edge. The method may include using the received information to move the mobile robotic device from the determined position along a path. The path may be substantially parallel to the edge, and may be located a distance from a reference point on the mobile robotic device during movement of the mobile robotic device.

In an embodiment, a system for navigating an area using a mobile robotic device may include a mobile robotic device including a processing device and a computer-readable storage medium and a video camera in communication with the mobile robotic device. The computer-readable storage medium may include one or more programming instructions for receiving, from the video camera, information associated with an edge located on a surface in an area, determining a position of the mobile robotic device on the surface relative to the edge, and adjusting the position of the mobile robotic device based on a proximity of the mobile robotic device to the edge. The one or more programming instructions for adjusting the position of the mobile robotic device may comprise one or more programming instructions for using the received information to move the mobile robotic device from the determined position along a path. The path may be substantially parallel to the edge, and may be located a distance from a reference point on the mobile robotic device during movement of the mobile robotic device.

In another embodiment, a method of navigating an environment using a mobile robotic device may include sending, to a video camera, a request for information comprising a color value and a tolerance value, receiving, from the video camera, information associated with an area corresponding to the color value and the tolerance value and using the received information to adjust a position of the mobile robotic device on a surface of the environment.

In another embodiment, a system for navigating an environment using a mobile robotic device may include a mobile robotic device having a processing device and a computer-readable storage medium, and a video camera in communication with the mobile robotic device. The computer-readable storage medium may include one or more programming instructions for sending, to the video camera, a request for information comprising a color value and a tolerance value, receiving, from the video camera, information associated with an area corresponding to the color value and the tolerance value, and using the received information to adjust a position of the mobile robotic device on a surface of the environment.

In any of the embodiments, the mobile robotic device of the present methods and systems may comprise an automatic cleaning device, and may include cleaning, by the automatic cleaning device, the surface along the path. Such embodiments may include determining one or more characteristics associated with the surface along the path, wherein the one or more characteristics comprise one or more of the following: hard wood flooring, tile flooring, carpeting, a high-traffic area, and a low-traffic area, may further include determining a cleaning method based on the determined one or more characteristics, and may further include applying the cleaning method to the surface along the path by performing one or more of the following: vacuuming the surface along the path, scrubbing the surface along the path, and waxing the surface along the path.

### BRIEF DESCRIPTION OF THE DRAWINGS

Aspects, features, benefits and advantages of the present invention will be apparent with regard to the following description and accompanying drawings, of which:
FIG. 1 illustrates an exemplary robotic system according to an embodiment.
FIG. 2 illustrates an exemplary method of navigating a mobile robotic device according to an embodiment.
FIG. 3 illustrates an exemplary method of cleaning an area with an automatic cleaning device according to an embodiment.
FIG. 4 illustrates an exemplary diagram of a mobile robotic device's movement according to an embodiment.
FIG. 5 illustrates an exemplary method of navigating a mobile robotic device according to an embodiment.
FIG. 6 illustrates an exemplary method of navigating an automatic cleaning device according to an embodiment.

### DETAILED DESCRIPTION

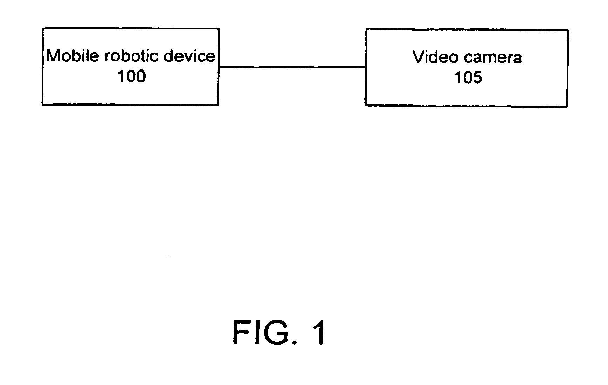

FIG. 1 illustrates an exemplary robotic system according to an embodiment. As illustrated by FIG. 1, a robotic system may include a mobile robotic device **100** and a video camera **105**. In an embodiment, the mobile robotic device **100** may be an autonomous device that is capable of automatically navigating its environment. A mobile robotic device **100** may include a processing device, a computer-readable storage medium and/or the like. In an embodiment, a mobile robotic device **100** may be in communication with one or more external processing devices, computer-readable storage mediums and/or the like.

In an embodiment, the video camera **105** may be a color video camera, a black and white video camera and/or the like. In an embodiment, the video camera **105** may be mounted on a front portion of a mobile robotic device **100**. In an alternate embodiment, the video camera **105** may be mounted on a rear portion, a side portion or other portion of the mobile robotic device **100**. The video camera **105** may include a processing device, a computer-readable storage medium and/or the like. In an embodiment, the video camera **105** may be in communication with the mobile robotic device **100** and/or one or more external processing devices, computer-readable storage mediums and/or the like. For example, the video camera **105** may collect information about the mobile robotic device's surroundings such as coordinates, navigational information, visual information and/or the like. The video camera **105** may provide this information to the mobile robotic device **100.**

In an embodiment, the video camera **105** may be a CMUcam3. The CMUcam3 is an ARM7TDMI-based programmable embedded computer vision sensor developed by Carnegie Mellon University. Additional and/or alternate video cameras may be used within the scope of this disclosure.

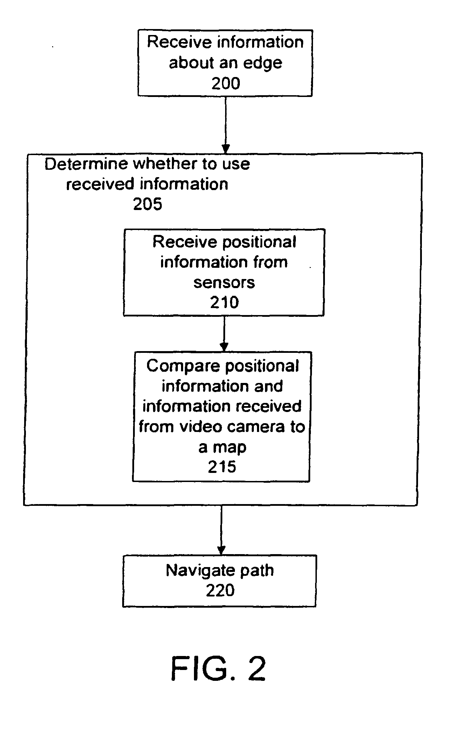

FIG. 2 illustrates an exemplary method of navigating a mobile robotic device according to an embodiment. As illustrated by FIG. 2, a mobile robotic device may receive **200** information regarding its surrounding environment from a video camera. For example, in an embodiment, a video camera may perform image processing on a video frame to locate one or more substantially straight lines in the image. In an embodiment, a substantially straight line may be representative of a boundary or edge between rooms, floor types and/or the like. For example, a video camera may be able to detect an edge between two adjoining rooms. Similarly, a video camera may be able to detect an edge between a carpeted floor and a tile floor. In an embodiment, an edge may be detected based on color contrast and/or the like.

In an embodiment, the mobile robotic device may receive **200** information regarding an edge from the video camera. The information may include values associated with the slope, the intercept and/or the error of a line detected by the video camera. For example, the slope, intercept and/or error associated with a substantially straight lines from an image of a surface, such as a ground surface, a floor surface or other surface over which the mobile robotic device is travelling may be provided to the mobile robotic device. In an embodiment, the video camera may repetitively send updated information to the mobile robotic device. For example, the video camera may send the mobile robotic device updated slope values, intercept values and/or error values associated with a detected line several times per second.

In an embodiment, a mobile robotic device may use this information to determine its position relative to the detected edge. For example, a mobile robotic device may compare information about its current position, such as its coordinates, heading and/or the like, with information received from the video camera regarding the edge. The mobile robotic device may use this comparison to determine its position relative to the edge, its distance away from the edge and/or the like.

In an embodiment, a mobile robotic device may detect an edge located in the direction of the mobile robotic device's movement. For example, a mobile robotic device may detect an edge in front of the mobile robotic device when the mobile robotic device is moving forward. A mobile robotic device may detect an edge that is substantially perpendicular to its movement. For example, a mobile robotic device may detect an edge associated with a wall or other barrier that the mobile robotic device is approaching. In an embodiment, a mobile robotic device may adjust its motion based on its proximity to a detected edge. For example, a mobile robotic device may turn itself around or otherwise change its course when it comes within two feet of the detected edge. Additional and/or alternate proximities may be used within the scope of this disclosure.

In an embodiment, the mobile robotic device may determine **205** whether to use any of the information received from the video camera to adjust its position. For example, the mobile robotic device may receive **210** positional information from one or more sensors, such as sonar, radar and/or the like. The mobile robotic device may compare **215** the information that it receives from its sensors and the information that it receives from the video camera to information from a map of an area or environment in which the mobile robotic device is navigating.

In an embodiment, a map may be generated by the mobile robotic device and/or another computing device during the mobile robotic device's first navigation of the area. For example, the mobile robotic device may be manually controlled through an area during which time the mobile robotic device may generate and store a map of the navigated area. In an embodiment, the mobile robotic device may compare **215** the information it receives **210** from its sensors and the information it receives from the video camera to the digital representation of the map to determine which information to use. In an embodiment, the mobile robotic device may use the information that has the least amount of error as compared to the mobile robotic device's current position. For example, a mobile robotic device may determine a current position using a map. It may compare the information received from its sensor and the information it receives from its video camera to determine which information has the least amount of error relative to its current position. The mobile robotic device may adjust its position based on the information associated with the least amount of error.

In an embodiment, the mobile robotic device may use the information associated with an edge and its determined position to navigate **220** a path. In an embodiment, the mobile robotic device may navigate **220** a path relative to the edge. For example, the mobile robotic device may navigate **220** a path that begins at the determined position and that runs parallel to the edge. Alternatively, the mobile robotic device may navigate **220** a path that begins at the determined position and that is not parallel to the edge.

In an embodiment, the mobile robotic device may navigate **220** a path such that the edge is located a certain distance from a reference point on the mobile robotic device. The reference point may be a side portion, a front portion, a back portion and/or the like of the mobile robotic device. For example, a mobile robotic device may use a detected line as a side registration by tracking the line on the right or left side of the mobile robotic device.

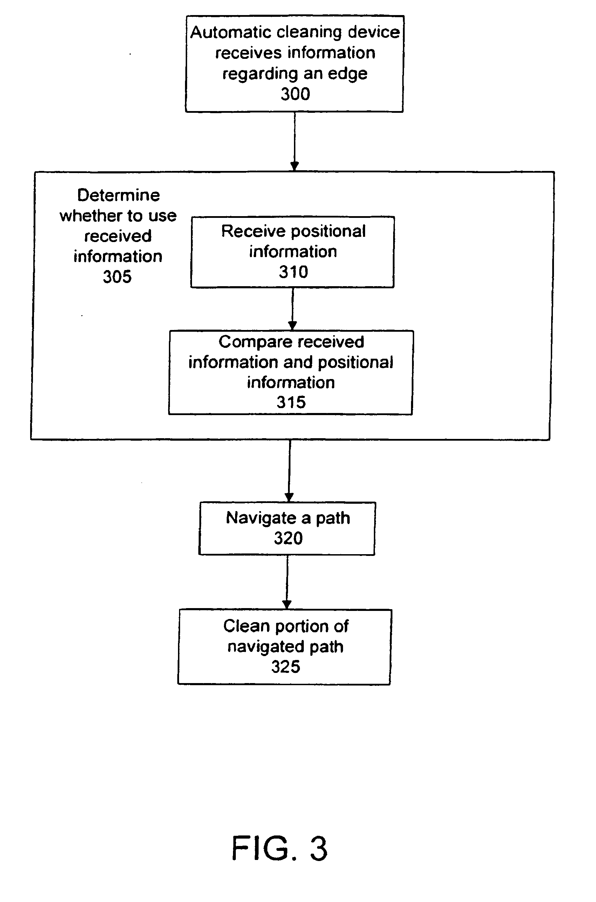

In an embodiment, a mobile robotic device may include an automatic cleaning device. An automatic cleaning device may be a mobile robotic device that can automatically navigate and clean surfaces, such as floors. FIG. 3 illustrates an exemplary method of cleaning an area with an automatic cleaning device according to an embodiment.

As described above with respect to a mobile robotic device, an automatic cleaning device may receive **300** information regarding an edge from the video camera. The information may include values associated with the slope, the intercept and/or the error of a line detected by the video camera.

In an embodiment, an automatic cleaning device may use this received information to determine its position relative to the detected edge. For example, an automatic cleaning device may compare information about its current position, such as its coordinates, heading and/or the like, with information received from the video camera regarding the edge.

In an embodiment, the automatic cleaning device may determine **305** whether to use any of the information received from the video camera to adjust its position. For example, the automatic cleaning device may receive **310** positional information from one or more sensors, such as sonar, radar and/or the like. The automatic device may compare **315** the information that it receives from its sensors and the information that it receives from the video camera to information from a map of an area in which the automatic cleaning device is navigating.

In an embodiment, the automatic cleaning device may compare **315** the information it receives **310** from its sensors and the information it receives from the video camera to the digital representation of the map to determine which information to use. In an embodiment, the automatic cleaning device may use the information that has the least amount of error as compared to the automatic cleaning device's current position. For example, an automatic cleaning device may determine a current position using a map. It may compare the information received from its sensor and the information it receives from its video camera to determine which information has the least amount of error relative to its current position. The automatic cleaning device may adjust its position based on the information associated with the least amount of error.

In an embodiment, the automatic cleaning device may use the information associated with an edge and its determined position to navigate 320 a path. The automatic cleaning device may navigate **320** a path relative to the edge. For example, the automatic cleaning device may navigate **320** a path that begins at the determined position and that runs parallel to the edge. In an embodiment, the automatic cleaning device may navigate **320** the path such that the edge is located a certain distance from a reference point on the automatic cleaning device. The reference point may be a side portion, a front portion, a back portion and/or the like of the automatic cleaning device. For example, an automatic cleaning device may use a detected line as a side registration by tracking the line on the right or left side of the automatic cleaning device.

In an embodiment, the automatic cleaning device may clean **325** at least a portion of its navigated path. For example, an automatic cleaning device may be able to determine one or more characteristics corresponding to its determined position. A characteristic may include, for example, a floor type, such as hard wood, tile, carpet and/or the like. A characteristic may include whether the position is in a high-traffic area, a low-traffic area and/or the like. In an embodiment, an automatic cleaning device may determine an appropriate cleaning method based on the determined characteristics. For example, the automatic cleaning device may vacuum a carpeted area, scrub and/or wax a hardwood or tile area and/or the like.

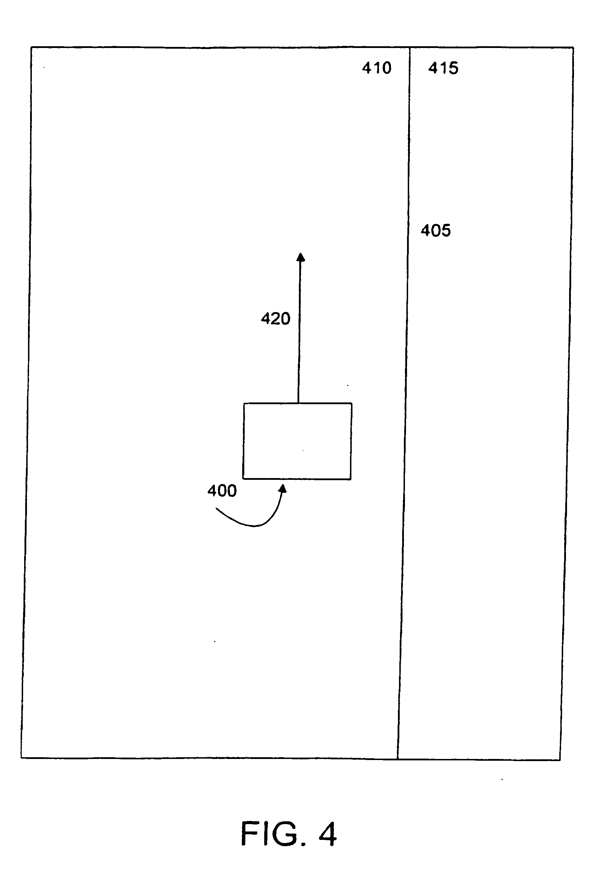

FIG. 4 illustrates an exemplary diagram of a mobile robotic device's movement according to an embodiment. As illustrated by FIG. 4, a mobile robotic device **400** may track an edge **405** between a carpeted portion of a floor **410** and a tiled portion of a floor **415**. In an embodiment, the mobile robotic device **400** may move relative to the edge **405**. For example, as illustrated in FIG. 3, the mobile robotic device **400** may move along the illustrated path **420**, which may run parallel to the edge **405.**

In an embodiment, a mobile robotic device may navigate its surroundings based on its location relative to an area of a particular color. An area may be a surface area, an item, a landmark and/or the like. For example, a mobile robotic device may navigate an area based on its relative position to a green chair located in a room.

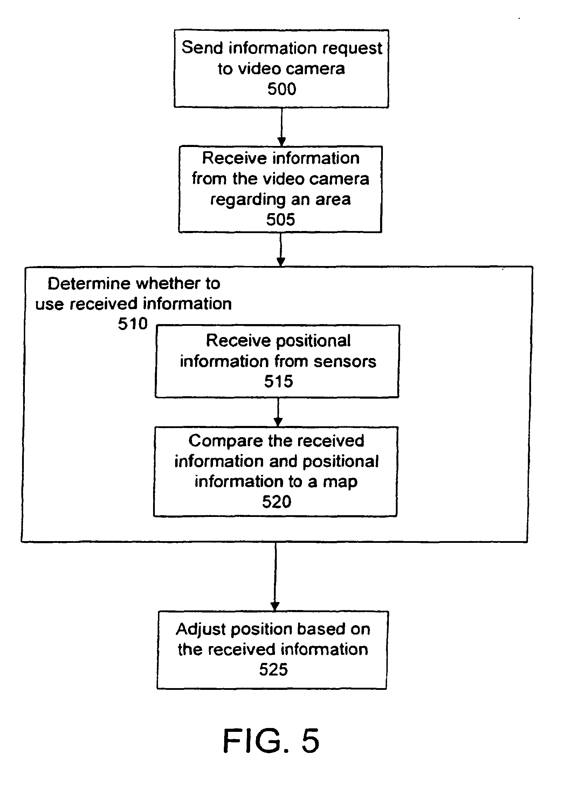

FIG. 5 illustrates an exemplary method of navigating a mobile robotic device according to an embodiment. As illustrated by FIG. 5, a mobile robotic device may send **500** an information request to the video camera. The information request may include an indication of a color and a tolerance associated with the color. In an embodiment, an indication of a color may be a color name, a number associated with a color and/or the like. For example, a mobile robotic device may send **500** an instruction to the video camera asking it to search for the color green. The instruction may also include a tolerance value which may instruct the video camera as to a range of colors that may be accepted.

In an embodiment, the mobile robotic device may receive **505** information from the video camera. For example, the mobile robotic device may receive **505** from the video camera coordinates associated with a substantially central portion of an area corresponding to the specified color. The mobile robotic device may also receive **505** coordinates of one or more corners of a rectangle that encompasses the detected area. For example, the video camera may send the mobile robotic device coordinates of the corners of a bounding box that is just large enough to completely encompass the detected area. In an embodiment, the mobile robotic device may receive a number of pixels of the color that were detected in the area.

In an embodiment, the mobile robotic device may receive **505** from the video camera a numerical value associated with a detected color and/or an associated tolerance range. For example, each color that is detected by the video camera may be assigned a numerical value. The numerical value associated with a detected color may be compared to a numerical value associated with the requested color. If the numerical value associated with the detected color is within a tolerance range (i.e., the numerical value associated with the requested color +/- the tolerance value), the detected color may be accepted. The mobile robotic device may receive from the video camera the value of the detected color and/or the tolerance range.

In an embodiment, the mobile robotic device may determine **510** whether to use any of the information received from the video camera in navigating its path. For example, the mobile robotic device may receive **515** positional information from one or more sensors, such as sonar, radar and/or the like. In an embodiment, the mobile robotic device may compare **520** the information that it receives from its sensors and the information that it receives from the video camera to information from a map of an area in which the mobile robotic device is navigating.

In an embodiment, a map may be generated by the mobile robotic device and/or another computing device during the mobile robotic device's first navigation of the area. For example, the mobile robotic device may be manually controlled through an area during which time the mobile robotic device may generate and store a map of the navigated area. In an alternate embodiment, a map of an area may be generated manually. For example, a may be generated by a user and a digital representation of the map may be stored electronically.

In an embodiment, the mobile robotic device may compare **520** the information it receives **515** from its sensors and the information it receives from the video camera to the digital representation of the map to determine which information to use. In an embodiment, the mobile robotic device may use the information that has the least amount of error as compared to the mobile robotic device's current position. For example, a mobile robotic device may determine a current position using a map. It may compare the information received from its sensor and the information it receives from its video camera to determine which information has the least amount of error relative to its current position. The mobile robotic device may adjust its position based on the information associated with the least amount of error.

In an embodiment, the mobile robotic device may adjust **525** its position based on the most accurate information. The mobile robotic device may use the information to adjust **525** its position, heading and/or the like. For example, an estimated position of the mobile robotic device may be determined. The estimated position may include coordinates, a heading and/or the like. In an embodiment, an actual position may be determined based on the information associated with the detected area that is received by the mobile robotic device. The estimated position may be compared to the actual position, and the mobile robotic device may adjust **525** its position to compensate for any positional error that may exist. For example, the mobile robotic device may navigate from its actual position to the estimated position.

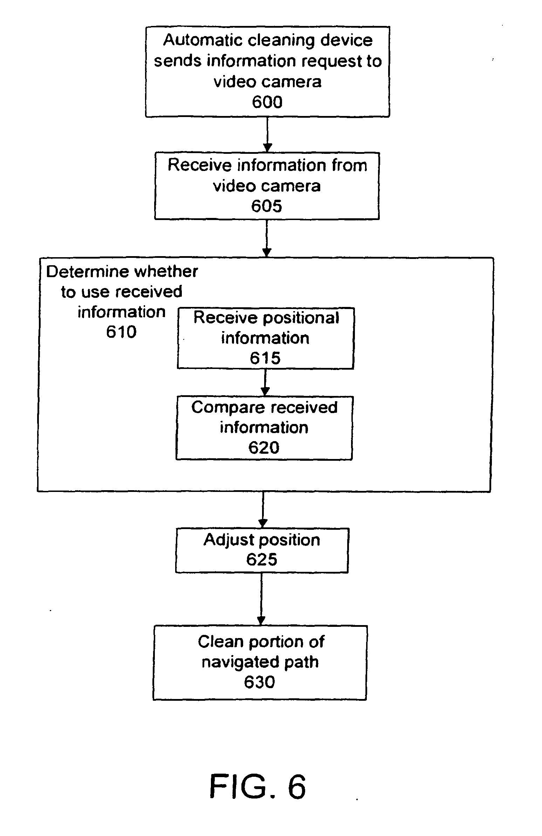

FIG. 6 illustrates an exemplary method of navigating an automatic cleaning device according to an embodiment. As illustrated by FIG. 6, an automatic cleaning device may send **600** an information request to the video camera. The information request may include an indication of a color and a tolerance associated with the color. The instruction may also include a tolerance value which may instruct the video camera as to a range of colors that may be accepted.

In an embodiment, the automatic cleaning device may receive **605** information from the video camera. For example, the automatic cleaning device may receive **605** from the video camera coordinates associated with a substantially central portion of an area corresponding to the specified color. The automatic cleaning device may also receive **605** coordinates of one or more corners of a rectangle that encompasses the detected area. In an embodiment, the automatic cleaning device may receive a number of pixels of the color that were detected in the area.

In an embodiment, the automatic cleaning device may receive **605** from the video camera a numerical value associated with a detected color and/or an associated tolerance range. For example, each color that is detected by the video camera may be assigned a numerical value. The numerical value associated with a detected color may be compared to a numerical value associated with the requested color. If the numerical value associated with the detected color is within a tolerance range (i.e., the numerical value associated with the requested color +/- the tolerance value), the detected color may be accepted. The automatic cleaning device may receive from the video camera the value of the detected color and/or the tolerance range.

In an embodiment, the automatic cleaning device may determine **610** whether to use any of the information received from the video camera in navigating its path. For example, the automatic cleaning device may receive **615** positional information from one or more sensors, such as sonar, radar and/or the like. In an embodiment, the automatic cleaning device may compare **620** the information that it receives from its sensors and the information that it receives from the video camera to information from a map of an area in which the automatic cleaning device is navigating.

In an embodiment, a map may be generated by the automatic cleaning device and/or another computing device during the automatic cleaning device's first navigation of the area. For example, the automatic cleaning device may be manually controlled through an area during which time the mobile robotic device may generate and store a map of the navigated area. In an embodiment, the mobile robotic device may compare **620** the information it receives **615** from its sensors and the information it receives from the video camera to the digital representation of the map to determine which information to use.

In an embodiment, the automatic cleaning device may use the information that has the least amount of error as compared to the automatic cleaning device's current position. For example, an automatic cleaning device may determine a current position using a map. It may compare the information received from its sensor and the information it receives from its video camera to determine which information has the least amount of error relative to its current position. The automatic cleaning device may adjust its position based on the information associated with the least amount of error.

In an embodiment, the automatic cleaning device may adjust **625** its position based on the most accurate information. The automatic cleaning device may use the information to adjust **625** its position, heading and/or the like. For example, an estimated position of the automatic cleaning device may be determined. The estimated position may include coordinates, a heading and/or the like. In an embodiment, an actual position may be determined based on the information associated with the detected area that is received by the automatic cleaning device. The estimated position may be compared to the actual position, and the automatic cleaning device may adjust **625** its position to compensate for any positional error that may exist. For example, the automatic cleaning device may navigate from its actual position to the estimated position.

In an embodiment, the automatic cleaning device may clean **630** at least a portion of its navigated path. For example, an automatic cleaning device may be able to determine one or more characteristics corresponding to its determined position. A characteristic may include, for example, a floor type, such as hard wood, tile, carpet and/or the like. A characteristic may include whether the position is in a high-traffic area, a low-traffic area and/or the like. In an embodiment, an automatic cleaning device may determine an appropriate cleaning method based on the determined characteristics. For example, the automatic cleaning device may vacuum a carpeted area, scrub and/or wax a hardwood or tile area and/or the like.

It will be appreciated that various of the above-disclosed and other features and functions, or alternatives thereof, may be desirably combined into many other different systems or applications. Also that various presently unforeseen or unanticipated alternatives, modifications, variations or improvements therein may be subsequently made by those skilled in the art which are also intended to be encompassed by the following claims.

The present application claims priority from US Patent Applications Nos. 12/616452 and 12/616577. The following numbered clauses 1.1 to 1.20 and 2.1 to 2.29, which correspond to the claims of those earlier US Applications as filed, form part of the present disclosure and in particular form further aspects of the invention, whether or not they appear in the present claims.
1.1. A method of navigating an area using a mobile robotic device, the method comprising: receiving, from a video camera, information associated with an edge located on a surface; determining, by a mobile robotic device, a position of the mobile robotic device on the surface relative to the edge; and using the received information to move the mobile robotic device from the determined position along a path, wherein the path is substantially parallel to the edge, wherein the edge is located a distance from a reference point on the mobile robotic device during movement of the mobile robotic device.
1.2. The method of clause 1.1, wherein the receiving information comprises receiving information in response to a request for information from the mobile robotic device to the video camera.
1.3. The method of clause 1.1, wherein the receiving information comprising receiving one or more of the following: a slope associated with the edge; an intercept associated with the edge; and an error associated with the edge.
1.4. The method of clause 1.1, wherein the receiving information associated with an edge comprises continuously receiving information from the video camera over a period of time.
1.5. The method of clause 1.1, wherein using the received information comprises: comparing the received information and position data received from one or more sensors associated with the mobile robotic device to a digital representation of a map of the area to determine whether the received information is more accurate than the received position data; and if so, adjusting the path based on the received information.
1.6. A method of navigating an environment using a mobile robotic device, the method comprising: sending, to a video camera, a request for information comprising a color value and a tolerance value; receiving, from the video camera, information associated with an area corresponding to the color value and the tolerance value; and using the received information to adjust a position of the mobile robotic device on a surface of the environment.
1.7. The method of clause 1.6, wherein the received information comprises one or more of the following: coordinates associated with a substantially center portion of the area; coordinates associated with one or more corners of a rectangle that surrounds the area; a number of pixels of the color within the area; a numerical value associated with a detected color; and a tolerance range associated with the detected color.
1.8. The method of clause 1.6, wherein the using comprises: comparing the received information and position data received from one or more sensors associated with the mobile robotic device to a digital representation of a map of the environment to determine whether the received information is more accurate than the received position data; and if so, adjusting the path based on the received information.
1.9. The method of clause 1.6, wherein using the received information to adjust a position of the mobile robotic device comprises: determining an estimated location of the mobile robotic device; using the received information to determine an actual location of the mobile robotic device; and if the estimated location differs from the actual location, moving the mobile robotic device to the estimated location.
1.10. A method of navigating an environment using a mobile robotic device, the method comprising: receiving, from a video camera, information associated with an edge located on a surface; determining, by a mobile robotic device, a position of the mobile robotic device on the surface relative to the edge; and adjusting the position of the mobile robotic device based on a proximity of the mobile robotic device to the edge.
1.11. The method of clause 1.10, wherein receiving information associated with an edge comprises receiving information associated with an edge located substantially perpendicular to the mobile robotic device's movement.
1.12. A system for navigating an area using a mobile robotic device, the system comprising: a mobile robotic device comprising a processing device and a computer-readable storage medium; and a video camera in communication with the mobile robotic device, wherein the computer-readable storage medium comprises one or more programming instructions for: receiving, from the video camera, information associated with an edge located on a surface in an area, determining a position of the mobile robotic device on the surface relative to the edge, and using the received information to move the mobile robotic device from the determined position along a path, wherein the path is substantially parallel to the edge, wherein the edge is located a distance from a reference point on the mobile robotic device during movement of the mobile robotic device.
1.13. The system of clause 1.12, wherein the one or more programming instructions for receiving information comprise one or more programming instructions for receiving information in response to a request for information from the mobile robotic device to the video camera.
1.14. The system of clause 1.12, wherein the one or more programming instructions for receiving information comprise one or more programming instructions for receiving one or more of the following: a slope associated with the edge; an intercept associated with the edge; and an error associated with the edge.
1.15. The system of clause 1.12, wherein the one or more programming instructions for receiving information associated with an edge comprise one or more programming instructions for continuously receiving information from the video camera over a period of time.
1.16. The system of clause 1.12, wherein the one or more programming instructions for using the received information comprise one or more programming instructions for: comparing the received information and position data received from one or more sensors associated with the mobile robotic device to a digital representation of a map of the area to determine whether the received information is more accurate than the received position data; and if so, adjusting the path based on the received information.
1.17. A system for navigating an environment using a mobile robotic device, the system comprising: a mobile robotic device comprising a processing device and a computer-readable storage medium; and a video camera in communication with the mobile robotic device; wherein the computer-readable storage medium comprises one or more programming instructions for: sending, to the video camera, a request for information comprising a color value and a tolerance value, receiving, from the video camera, information associated with an area corresponding to the color value and the tolerance value, and using the received information to adjust a position of the mobile robotic device on a surface of the environment.
1.18. The system of clause 1.17, wherein the programming instructions for receiving information comprise one or more programming instructions for receiving one or more of the following: coordinates associated with a substantially center portion of the area; coordinates associated with one or more corners of a rectangle that surrounds the area; a number of pixels of the color within the area; and a numerical value associated with a detected color; and a tolerance range associated with the detected color.
1.19. The system of clause 1.17, wherein the programming instructions for using the received information comprise one or more programming instructions for: comparing the received information and position data received from one or more sensors associated with the mobile robotic device to a digital representation of a map of the environment to determine whether the received information is more accurate than the received position data; and if so, adjusting the path based on the received information.
1.20. The system of clause 1.17, wherein the programming instructions for using the received information to adjust a position of the mobile robotic device comprise one or more programming instructions for: determining an estimated location of the mobile robotic device; using the received information to determine an actual location of the mobile robotic device; and if the estimated location differs from the actual location, moving to the estimated location.
2.1. A method of cleaning an area using an automatic cleaning device, the method comprising: receiving, from a video camera, information associated with an edge located on a surface; determining, by an automatic cleaning device, a position of the automatic cleaning device on the surface relative to the edge; and using the received information to move the automatic cleaning device from the determined position along a path so that the automatic cleaning device cleans the surface along the path, wherein the path is substantially parallel to the edge, wherein the edge is located a distance from a reference point on the automatic cleaning device during movement of the automatic cleaning device.
2.2. The method of clause 2.1, wherein the receiving information comprises receiving information in response to a request for information from the automatic cleaning device to the video camera.
2.3. The method of clause 2.1, wherein the receiving information comprising receiving one or more of the following: a slope associated with the edge; an intercept associated with the edge; and an error associated with the edge.
2.4. The method of clause 2.1, wherein the receiving information associated with an edge comprises continuously receiving information from the video camera over a period of time.
2.5. The method of clause 2.1, wherein using the received information comprises: adjusting the path based on the received information in response to an amount of error associated with the received information as compared to the position being less than an amount of error associated with the received position data as compared to the position.
2.6. The method of clause 2.1, wherein cleaning the surface along the path comprises: determining one or more characteristics associated with the surface along the path; determining a cleaning method based on the determined one or more characteristics; and applying the cleaning method to the surface along the path.
2.7. The method of clause 2.6, wherein determining one or more characteristics comprises determining that surface along the path comprises one or more of the following: hard wood flooring; tile flooring; carpeting; a high-traffic area; and a low-traffic area.
2.8. The method of clause 2.6, wherein applying a cleaning method comprises performing one or more of the following: vacuuming the surface along the path; scrubbing the surface along the path; and waxing the surface along the path.
2.9. A method of cleaning an environment using an automatic cleaning device, the method comprising: sending, to a video camera, a request for information comprising a color value and a tolerance value; receiving, from the video camera, information associated with an area corresponding to the color value and the tolerance value; and using the received information to adjust a position of the automatic cleaning device on a surface of an environment.
2.10. The method of clause 2.9, wherein the received information comprises one or more of the following: coordinates associated with a substantially center portion of the area; coordinates associated with one or more corners of a rectangle that surrounds the area; a number of pixels of the color within the area; a numerical value associated with a detected color; and a tolerance range associated with the detected color.
2.11. The method of clause 2.9, wherein the using comprises: adjusting the path based on the received information in response to an amount of error associated with the received information as compared to the position being less than an amount of error associated with the received position data as compared to the position.
2.12. The method of clause 2.9, wherein using the received information to adjust a position of the automatic cleaning device comprises: determining an estimated location of the automatic cleaning device; using the received information to determine an actual location of the automatic cleaning device; and if the estimated location differs from the actual location, moving the automatic cleaning device to the estimated location.
2.13. The method of clause 2.9, further comprising cleaning at least a portion of the surface.
2.14. The method of clause 2.13, wherein cleaning at least a portion of the surface comprises: determining one or more characteristics associated with the portion of the surface; determining a cleaning method based on the determined one or more characteristics; and applying the cleaning method to the portion of the surface.
2.15. A method of cleaning an area using an automatic cleaning device, the method comprising: receiving, from a video camera, information associated with an edge located on a surface; determining, by an automatic cleaning device, a position of the automatic cleaning device on the surface relative to the edge; and adjusting the position of the automatic cleaning device based on a proximity of the automatic cleaning device to the edge.
2.16. The method of clause 2.15, wherein receiving information associated with an edge comprises receiving information associated with an edge located substantially perpendicular to the automatic cleaning device's movement.
2.17. A system for cleaning an area using an automatic cleaning device, the system comprising: an automatic cleaning device comprising a processing device and a computer-readable storage medium; and a video camera in communication with the automatic cleaning device, wherein the computer-readable storage medium comprises one or more programming instructions for: receiving, from the video camera, information associated with an edge located on a surface of an area, determining a position of the automatic cleaning device on the surface relative to the edge, and using the received information to move the automatic cleaning device from the determined position along a path, wherein the path is substantially parallel to the edge, wherein the edge is located a distance from a reference point on the automatic cleaning device during movement of the automatic cleaning device.
2.18. The system of clause 2.17, wherein the one or more programming instructions for receiving information comprise one or more programming instructions for receiving information in response to a request for information from the automatic cleaning device to the video camera.
2.19. The system of clause 2.17, wherein the one or more programming instructions for receiving information comprise one or more programming instructions for receiving one or more of the following: a slope associated with the edge; an intercept associated with the edge; and an error associated with the edge.
2.20. The system of clause 2.17, wherein the one or more programming instructions for receiving information associated with an edge comprise one or more programming instructions for continuously receiving information from the video camera over a period of time.
2.21. The system of clause 2.17, wherein the one or more programming instructions for using the received information comprise one or more programming instructions for: adjusting the path based on the received information in response to an amount of error associated with the received information as compared to the position being less than an amount of error associated with the received position data as compared to the position.
2.22. The system of clause 2.17, wherein the computer-readable storage medium comprises one or more programming instructions for cleaning at least a portion of the path.
2.23. The system of clause 2.22, wherein the one or more programming instructions for cleaning at least a portion of the path comprise one or more programming instructions for: determining one or more characteristics associated with the portion of the path; determining a cleaning method based on the determined one or more characteristics; and applying the cleaning method to the portion of the path.
2.24. A system for cleaning an environment using an automatic cleaning device, the system comprising: an automatic cleaning device comprising a processing device and a computer-readable storage medium; and a video camera in communication with the automatic cleaning device; wherein the computer-readable storage medium comprises one or more programming instructions for: sending, to the video camera, a request for information comprising a color value and a tolerance value, receiving, from the video camera, information associated with an area corresponding to the color value and the tolerance value, and using the received information to adjust a position of the automatic cleaning device on a surface of the environment.
2.25. The system of clause 2.24, wherein the programming instructions for receiving information comprise one or more programming instructions for receiving one or more of the following: coordinates associated with a substantially center portion of the area; coordinates associated with one or more corners of a rectangle that surrounds the area; a number of pixels of the color within the area; a numerical value associated with a detected color; and a tolerance range associated with the detected color.
2.26. The system of clause 2.24, wherein the programming instructions for using the received information comprise one or more programming instructions for: adjusting the path based on the received information in response to an amount of error associated with the received information as compared to the position being less than an amount of error associated with the received position data as compared to the position.
2.27. The system of clause 2.24, wherein the programming instructions for using the received information to adjust a position of the automatic cleaning device comprise one or more programming instructions for: determining an estimated location of the automatic cleaning device;
   using the received information to determine an actual location of the automatic cleaning device; and if the estimated location differs from the actual location, moving to the estimated location.
2.28. The system of clause 2.24, wherein the computer-readable storage medium comprises one or more programming instructions for cleaning at least a portion of the surface.
2.29. The system of clause 2.28, wherein the one or more programming instructions for cleaning at least a portion of the path comprise one or more programming instructions for: determining one or more characteristics associated with the portion of the surface; determining a cleaning method based on the determined one or more characteristics; and applying the cleaning method to the portion of the surface.

## Claims

1. A method of navigating an environment using a mobile robotic device, the method comprising:
generating, by a mobile robotic device, a digital representation of a map of an area navigated by the mobile robotic device
receiving position data from one or more sensors associated with the mobile robotic device (210, 310, 515, 615);
receiving, from a video camera, information associated with an edge located on a surface of the area, wherein the edge comprises a substantially straight line (200, 300, 505, 605);
determining, by a mobile robotic device, a current position of the mobile robotic device on the surface relative to the edge;
comparing each of the received information and the received position data to the digital representation of the map to determine when the received information has a least amount of error relative to the current position (215, 315,520,620);
adjusting the current position of the mobile robotic device based on the received information in response to the received information having the least amount of error (220, 320, 525, 625).

2. The method of claim 1, wherein adjusting the current position comprises using the received information to move the mobile robotic device from the current position along a path, wherein the path is substantially parallel to the edge, wherein the edge is located a distance from a reference point on the mobile robotic device during movement of the mobile robotic device.

3. The method of claim 1 or claim 2, wherein receiving the information comprises:
continuously receiving information from the video camera over a period of time; and
receiving information associated with an edge located substantially perpendicular to the mobile robotic device's movement, wherein the received information comprises one or more of the following:
a slope associated with the edge; and
an intercept associated with the edge.

4. The method of any preceding claim, including:
sending, to the video camera, one or more instructions to search for a color in the area having a color value that is within a tolerance range (500);
receiving, from the video camera, information associated with at least a portion of the area that corresponds to the color value (505); and
using the received information to adjust the current position of the mobile robotic device (525).

5. The method of claim 4, wherein receiving information associated with at least a portion of the area that corresponds to the color value comprises one or more of the following:
coordinates of a substantially center of the portion of the area;
coordinates of one or more corners of a rectangle that surrounds the portion of the area;
a number of pixels of the color within the portion of the area;
a numerical value associated with a detected color; and
an indication of whether the detected color is within a tolerance range associated with the color.

6. The method of any preceding claim, wherein the mobile robotic device comprises an automatic cleaning device, and wherein the method further comprises cleaning, by the automatic cleaning device, at least a portion of the surface along the path by:
determining one or more characteristics associated with the surface along the path,
determining a cleaning method based on the determined one or more characteristics; and
applying the cleaning method to the portion of the surface.

7. The method of claim 6 wherein determining the one or more characteristics comprises determining that surface along the path comprises one or more of the following:
hard wood flooring,
tile flooring,
carpeting,
a high-traffic area, and
a low-traffic area; and
wherein applying the cleaning method comprises performing one or more of the following:
vacuuming the surface along the path,
scrubbing the surface along the path; and
waxing the surface along the path.

8. A system for navigating an environment using a mobile robotic device, the system comprising:
a mobile robotic device comprising a processing device and a computer-readable storage medium; and
a video camera in communication with the mobile robotic device;
wherein the computer-readable storage medium comprises one or more programming instructions for:
generating a digital representation of a map of an area navigated by the mobile robotic device,
receiving position data from one or more sensors associated with the mobile robotic device (210, 310, 515, 615),
receiving, from a video camera, information associated with an edge located on a surface of the area (200, 300, 505, 605),
determining a current position of the mobile robotic device on the surface relative to the edge,
comparing each of the received information and the received position data to the digital representation of the map to determine when the received information has a least amount of error relative to the current position (215, 315, 520, 620),
adjusting the current position of the mobile robotic device based on the received information in response to the received information having the least amount of error (220, 320, 525, 625).

9. The system of claim 8, wherein the one or more programming instructions for adjusting the current position of the mobile robotic device comprise one or more programming instructions for using the received information to move the mobile robotic device from the current position along a path, wherein the path is substantially parallel to the edge, wherein the edge is located a distance from a reference point on the mobile robotic device during movement of the mobile robotic device.

10. The system of claim 8, wherein the computer-readable storage medium comprises one or more programming instructions for:
sending, to the video camera, one or more instructions to search for a color in the area having a color value that is within a tolerance range (500),
receiving, from the video camera, information associated with at least a portion of the area that corresponds to the color value (505), wherein the information comprises one or more the following:
coordinates (605) of a substantially center of the portion of the area,
coordinates (605) of one or more corners of a rectangle that surrounds the portion of the area,
a number of pixels of the color within the portion of the area,
a numerical value associated with a detected color, and
an indication of whether the detected color is within a tolerance range associated with the color; and
using the received information to adjust the current position of the mobile robotic device (525).

11. The system of any one of claims 8 to 10, wherein the mobile robotic device comprises an automatic cleaning device, and wherein the method further comprises cleaning, by the automatic cleaning device, at least a portion of a surface along a path.

## Patentansprüche

1. Ein Verfahren zum Durchfahren einer Umgebung unter Verwendung einer mobilen Robotervorrichtung, wobei das Verfahren Folgendes beinhaltet:
Erzeugen, durch eine mobile Robotervorrichtung, einer digitalen Darstellung einer Karte eines Gebiets, das von der mobilen Robotervorrichtung durchfahren wird Empfangen von Positionsdaten von einem oder mehr Sensoren, die mit der mobilen Robotervorrichtung assoziiert sind (210, 310, 515, 615);
Empfangen, von einer Videokamera, von Informationen, die mit einem Rand, der sich auf einer Oberfläche des Gebiets befindet, assoziiert sind, wobei der Rand eine im Wesentlichen gerade Linie beinhaltet (200, 300, 505, 605);
Bestimmen, durch eine mobile Robotervorrichtung, einer gegenwärtigen Position der mobilen Robotervorrichtung auf der Oberfläche in Bezug auf den Rand;
Vergleichen jeder der empfangenen Informationen und der empfangenen Positionsdaten mit der digitalen Darstellung der Karte, um zu bestimmen, wann die empfangenen Informationen eine kleinste Fehlersumme in Bezug auf die gegenwärtige Position aufweisen (215, 315, 520, 620);
Anpassen der gegenwärtigen Position der mobilen Robotervorrichtung basierend auf den empfangenen Informationen als Reaktion darauf, dass die empfangenen Informationen die kleinste Fehlersumme aufweisen (220, 320, 525, 625).

2. Verfahren gemäß Anspruch 1, wobei das Anpassen der gegenwärtigen Position das Verwenden der empfangenen Informationen zum Bewegen der mobilen Robotervorrichtung von der gegenwärtigen Position entlang einem Pfad beinhaltet, wobei der Pfad im Wesentlichen parallel zu dem Rand ist, wobei sich der Rand während der Bewegung der mobilen Robotervorrichtung in einer Entfernung von einem Referenzpunkt auf der mobilen Robotervorrichtung befindet.

3. Verfahren gemäß Anspruch 1 oder Anspruch 2, wobei das Empfangen der Informationen Folgendes beinhaltet:
kontinuierliches Empfangen von Informationen von der Videokamera über einen Zeitraum; und
Empfangen von Informationen, die mit einem sich zu der Bewegung der mobilen Robotervorrichtung im Wesentlichen senkrecht befindenden Rand assoziiert sind, wobei die empfangenen Informationen eines oder mehr von Folgendem beinhalten:
ein mit dem Rand assoziierte Gefälle; und
einen mit dem Rand assoziierten Schnittpunkt.

4. Verfahren gemäß einem der vorhergehenden Ansprüche, das Folgendes umfasst:
Senden, an die Videokamera, von einem oder mehr Befehlen, in dem Gebiet nach einer Farbe zu suchen, die einen Farbwert aufweist, der innerhalb eines Toleranzbereichs liegt (500);
Empfangen, von der Videokamera, von Informationen, die mit mindestens einem Abschnitt des Gebiets, der dem Farbwert entspricht, assoziiert sind (505); und
Verwenden der empfangenen Informationen, um die gegenwärtige Position der mobilen Robotervorrichtung anzupassen (525).

5. Verfahren gemäß Anspruch 4, wobei das Empfangen von Informationen, die mit mindestens einem Abschnitt des Gebiets, der dem Farbwert entspricht, assoziiert sind, eines oder mehr von Folgendem beinhaltet:
Koordinaten von im Wesentlichen einem Mittelpunkt des Abschnitts des Gebiets; Koordinaten von einer oder mehr Ecken eines Rechtecks, das den Abschnitt des Gebiets umgibt;
eine Anzahl von Pixeln der Farbe innerhalb des Abschnitts des Gebiets;
einen numerischen Wert, der mit einer erkannten Farbe assoziiert ist; und
einen Hinweis, ob die erkannte Farbe innerhalb eines Toleranzbereichs, der mit der Farbe assoziiert ist, liegt.

6. Verfahren gemäß einem der vorhergehenden Ansprüche, wobei die mobile Robotervorrichtung eine automatische Reinigungsvorrichtung beinhaltet, und wobei das Verfahren ferner das Reinigen, durch die automatische Reinigungsvorrichtung, mindestens eines Abschnitts der Oberfläche entlang dem Pfad durch Folgendes beinhaltet:
Bestimmen von einer oder mehr Eigenschaften, die mit der Oberfläche entlang dem Pfad assoziiert sind,
Bestimmen eines Reinigungsverfahrens basierend auf den bestimmten einen oder mehr Eigenschaften; und
Anwenden des Reinigungsverfahrens auf den Abschnitt der Oberfläche.

7. Verfahren gemäß Anspruch 6, wobei das Bestimmen von der einen oder mehr Eigenschaften das Bestimmen beinhaltet, dass eine Oberfläche entlang dem Pfad eines oder mehr vom Folgendem beinhaltet:
Hartholzboden,
Fliesenboden,
Teppichboden,
ein stark frequentiertes Gebiet, und
ein schwach frequentiertes Gebiet; und
wobei das Anwenden des Reinigungsverfahrens das Durchführen von einem oder mehr der Folgenden beinhaltet:
Absaugen der Oberfläche entlang dem Pfad,
Schrubben der Oberfläche entlang dem Pfad; und
Bohnern der Oberfläche entlang dem Pfad.

8. Ein System zum Durchfahren einer Umgebung unter Verwendung einer mobilen Robotervorrichtung, wobei das System Folgendes beinhaltet:
eine mobile Robotervorrichtung, die eine Verarbeitungsvorrichtung und ein computerlesbares Speichermedium beinhaltet; und
eine Videokamera, die mit der mobilen Robotervorrichtung in Kommunikation steht;
wobei das computerlesbare Speichermedium einen oder mehr Programmierbefehle für Folgendes beinhaltet:
Erzeugen einer digitalen Darstellung einer Karte eines Gebiets, das von der mobilen Robotervorrichtung durchfahren wird,
Empfangen von Positionsdaten von einem oder mehr Sensoren, die mit der mobilen Robotervorrichtung assoziiert sind (210, 310, 515, 615),
Empfangen, von einer Videokamera, von Informationen, die mit einem Rand, der sich auf einer Oberfläche des Gebiets befindet, assoziiert sind (200, 300, 505, 605),
Bestimmen einer gegenwärtigen Position der mobilen Robotervorrichtung auf der Oberfläche in Bezug auf den Rand,
Vergleichen jeder der empfangenen Informationen und der empfangenen Positionsdaten mit der digitalen Darstellung der Karte, um zu bestimmen, wann die empfangenen Informationen die kleinste Fehlersumme in Bezug auf die gegenwärtige Position aufweisen (215, 315, 520, 620),
Anpassen der gegenwärtigen Position der mobilen Robotervorrichtung basierend auf den empfangenen Informationen als Reaktion darauf, dass die empfangenen Informationen die kleinste Fehlersumme aufweisen (220, 320, 525, 625).

9. System gemäß Anspruch 8, wobei der eine oder die mehr Programmierbefehle zum Anpassen der gegenwärtigen Position der mobilen Robotervorrichtung einen oder mehr Programmierbefehle zum Verwenden der empfangenen Informationen zum Bewegen der mobilen Robotervorrichtung von der gegenwärtigen Position entlang einem Pfad beinhalten, wobei der Pfad im Wesentlichen parallel zu dem Rand ist, wobei sich der Rand während der Bewegung der mobilen Robotervorrichtung in einer Entfernung von einem Referenzpunkt auf der mobilen Robotervorrichtung befindet.

10. System gemäß Anspruch 8, wobei das computerlesbare Speichermedium einen oder mehr Programmierbefehle für Folgendes beinhaltet:
Senden, an die Videokamera, von einem oder mehr Befehlen, in dem Gebiet nach einer Farbe zu suchen, die einen Farbwert aufweist, der innerhalb eines Toleranzbereichs liegt (500),
Empfangen, von der Videokamera, von Informationen, die mit mindestens einem Abschnitt des Gebiets, der dem Farbwert entspricht, assoziiert sind (505), wobei die Informationen eines oder mehr von Folgendem beinhalten:
Koordinaten (605) von im Wesentlichen einem Mittelpunkt des Abschnitts des Gebiets, Koordinaten (605) von einer oder mehr Ecken eines Rechtecks, das den Abschnitt des Gebiets umgibt,
eine Anzahl von Pixeln der Farbe innerhalb des Abschnitts des Gebiets,
einen numerischen Wert, der mit einer erkannten Farbe assoziiert ist, und
einen Hinweis, ob die erkannte Farbe innerhalb eines Toleranzbereichs, der mit der Farbe assoziiert ist, liegt; und
Verwenden der empfangenen Informationen, um die gegenwärtige Position der mobilen Robotervorrichtung anzupassen (525).

11. System gemäß einem der Ansprüche 8 bis 10, wobei die mobile Robotervorrichtung eine automatische Reinigungsvorrichtung beinhaltet, und wobei das Verfahren ferner das Reinigen, durch die automatische Reinigungsvorrichtung, mindestens eines Abschnitts einer Oberfläche entlang einem Pfad beinhaltet.

## Revendications

1. Une méthode pour parcourir un environnement à l'aide d'un dispositif robotique mobile, la méthode comprenant :
la génération, par un dispositif robotique mobile, d'une représentation numérique d'une carte d'une zone parcourue par le dispositif robotique mobile
la réception de données de position depuis un ou plusieurs capteurs associés au dispositif robotique mobile (210, 310, 515, 615) ;
la réception, depuis une caméra vidéo, d'informations associées à un bord situé sur une surface de la zone, dans laquelle le bord comprend une ligne substantiellement droite (200, 300, 505, 605) ;
la détermination, par un dispositif robotique mobile, d'une position actuelle du dispositif robotique mobile sur la surface relativement au bord ;
la comparaison de chacune des informations reçues et des données de position reçues à la représentation numérique de la carte pour déterminer le moment où les informations reçues ont une quantité d'erreur moindre relativement à la position actuelle (215,315,520,620);
l'ajustement de la position actuelle du dispositif robotique mobile sur la base des informations reçues en réponse aux informations reçues ayant la quantité d'erreur moindre (220, 320, 525, 625).

2. La méthode de la revendication 1, dans laquelle l'ajustement de la position actuelle comprend l'utilisation des informations reçues pour déplacer le dispositif robotique mobile de la position actuelle le long d'une trajectoire, dans laquelle la trajectoire est substantiellement parallèle au bord, dans laquelle le bord est situé à une distance d'un point de référence sur le dispositif robotique mobile durant le déplacement du dispositif robotique mobile.

3. La méthode de la revendication 1 ou de la revendication 2, dans laquelle les informations comprennent :
la réception en continu d'informations depuis la caméra vidéo sur une période de temps ; et
la réception d'informations associées à un bord situé de façon substantiellement perpendiculaire au déplacement du dispositif robotique mobile, dans laquelle les informations reçues comprennent un ou plusieurs des éléments suivants :
une pente associée au bord ; et
une interception associée au bord.

4. La méthode de n'importe quelle revendication précédente, comportant :
l'envoi, à la caméra vidéo, d'une ou de plusieurs instructions de rechercher une couleur dans la zone ayant une valeur de couleur qui soit comprise dans une gamme de tolérances (500) ;
la réception, depuis la caméra vidéo, d'informations associées à au moins une portion de la zone qui correspond à la valeur de couleur (505) ; et
l'utilisation des informations reçues pour ajuster la position actuelle du dispositif robotique mobile (525).

5. La méthode de la revendication 4, dans laquelle la réception d'informations associées à au moins une portion de la zone qui correspond à la valeur de couleur comprend un ou plusieurs des éléments suivants :
des coordonnées d'un centre substantiellement de la portion de la zone ;
des coordonnées d'un ou de plusieurs coins d'un rectangle qui entoure la portion de la zone ;
un nombre de pixels de la couleur au sein de la portion de la zone ;
une valeur numérique associée à une couleur détectée ; et
une indication de si la couleur détectée est comprise dans une gamme de tolérances associée à la couleur.

6. La méthode de n'importe quelle revendication précédente, dans laquelle le dispositif robotique mobile comprend un dispositif de nettoyage automatique, et la méthode comprenant en outre le nettoyage, par le dispositif de nettoyage automatique, d'au moins une portion de la surface le long de la trajectoire en :
déterminant une ou plusieurs caractéristiques associées à la surface le long de la trajectoire,
déterminant une méthode de nettoyage sur la base de cette ou ces caractéristiques déterminées ; et
appliquant la méthode de nettoyage à la portion de la surface.

7. La méthode de la revendication 6 dans laquelle la détermination de cette ou ces caractéristiques comprend la détermination que la surface le long de la trajectoire comprend un ou plusieurs des éléments suivants :
plancher en bois franc,
plancher en carrelage,
moquette,
une zone de grand trafic, et
une zone de faible trafic ; et
dans laquelle l'application de la méthode de nettoyage comprend la réalisation d'une ou de plusieurs des actions suivantes :
passer l'aspirateur sur la surface le long de la trajectoire,
astiquer la surface le long de la trajectoire ; et
cirer la surface le long de la trajectoire.

8. Un système pour parcourir un environnement à l'aide d'un dispositif robotique mobile, le système comprenant :
un dispositif robotique mobile comprenant un dispositif de traitement et un support de stockage lisible par ordinateur ; et
une caméra vidéo en communication avec le dispositif robotique mobile ; dans lequel le support de stockage lisible par ordinateur comprend une ou plusieurs instructions de programmation pour :
générer une représentation numérique d'une carte d'une zone parcourue par le dispositif robotique mobile,
recevoir des données de position depuis un ou plusieurs capteurs associés au dispositif robotique mobile (210, 310, 515, 615),
recevoir, depuis une caméra vidéo, des informations associées à un bord situé sur une surface de la zone (200, 300, 505, 605),
déterminer une position actuelle du dispositif robotique mobile sur la surface relativement au bord,
comparer chacune des informations reçues et les données de position reçues à la représentation numérique de la carte pour déterminer le moment où les informations reçues ont une quantité d'erreur moindre relativement à la position actuelle (215, 315, 520, 620),
ajuster la position actuelle du dispositif robotique mobile sur la base des informations reçues en réponse aux informations reçues ayant la quantité d'erreur moindre (220, 320, 525, 625).

9. Le système de la revendication 8, dans lequel cette ou ces instructions de programmation pour ajuster la position actuelle du dispositif robotique mobile comprennent une ou plusieurs instructions de programmation pour utiliser les informations reçues pour déplacer le dispositif robotique mobile de la position actuelle le long d'une trajectoire, dans lequel la trajectoire est substantiellement parallèle au bord, dans lequel le bord est situé à une distance d'un point de référence sur le dispositif robotique mobile durant le déplacement du dispositif robotique mobile.

10. Le système de la revendication 8, dans lequel le support de stockage lisible par ordinateur comprend une ou plusieurs instructions de programmation pour :
envoyer, à la caméra vidéo, une ou plusieurs instructions de rechercher une couleur dans la zone ayant une valeur de couleur qui soit comprise dans une gamme de tolérances (500),
recevoir, depuis la caméra vidéo, des informations associées à au moins une portion de la zone qui correspond à la valeur de couleur (505), dans lequel les informations comprennent un ou plusieurs des éléments suivants :
des coordonnées (605) d'un centre substantiellement de la portion de la zone,
des coordonnées (605) d'un ou de plusieurs coins d'un rectangle qui entoure la portion de la zone,
un nombre de pixels de la couleur au sein de la portion de la zone,
une valeur numérique associée à une couleur détectée, et
une indication de si la couleur détectée est comprise dans une gamme de tolérances associée à la couleur ; et
utiliser les informations reçues pour ajuster la position actuelle du dispositif robotique mobile (525).

11. Le système de l'une quelconque des revendications 8 à 10, dans lequel le dispositif robotique mobile comprend un dispositif de nettoyage automatique, et dans lequel la méthode comprend en outre le nettoyage, par le dispositif automatique de nettoyage, d'au moins une portion d'une surface le long d'une trajectoire.
